# EUROPÄISCHE PATENTSCHRIFT

(11) **EP 0 761 792 B1**
(45) Veröffentlichungstag und Bekanntmachung des Hinweises auf die Patenterteilung: **22.03.2000**
(21) Anmeldenummer: 96113239.6
(22) Anmeldetag: 19.08.1996
(51) Int. Cl.: C09J 5/00, F16B 13/14

(54) **Dübelmasse für die chemische Befestigungstechnik**
Putty composition for chemical fastening technology
Composition de mastic pour la technique de fixation chimique

(30) Priorität: 29.08.1995 DE 19531649
(43) Veröffentlichungstag der Anmeldung: 12.03.1997
(73) Patentinhaber: DSM RESINS B.V., 8022 AW Zwolle (NL)
(72) Erfinder: Schwiegk, Stefan, Dr., 67433 Neustadt (DE); Hübinger, Wolfgang, Dr., 67117 Limburgerhof (DE); Folda, Thomas, Dr., 67435 Neustadt (DE); Ittemann, Peter, Dr., 68623 Lampertheim (DE); Riegel, Willi, 68753 Waghäusel (DE); Moench, Monika, 86899 Landsberg (DE); Mauthe, Peter, 86842 Tuerkheim (DE)
(74) Vertreter: den Hartog, Jeroen Hendrikus Joseph

(56) Entgegenhaltungen:
- EP-A- 0 157 738
- EP-A- 0 508 183
- DE-A- 4 231 161

## Beschreibung

Die Verwendung von Reaktivharzmassen als Bindemittel für die chemische Befestigungstechnik ist seit langem bekannt. Es handelt sich dabei um Zweikomponentensysteme, wobei eine Komponente das Reaktivharz und die andere Komponente den Härter enthält. Andere, übliche Bestandteile wie Füllmittel, Beschleuniger, Stabilisatoren, Lösungsmittel einschließlich Reaktivlösungsmittel (Comonomere) können in der einen und/oder der anderen Komponente enthalten sein. Durch Vermischen der beiden Komponenten wird dann durch Radikalbildung die Reaktion in Gang gebracht und das Harz zum Duromeren gehärtet.

Zur Befestigung von Ankerstangen in Bohrlöchern von Beton oder massivem Gestein werden im allgemeinen Patronen mit 2 Kammern zur Trennung der in der Patrone enthaltenen Komponenten verwendet (s. z.B. EP-A 150 555). Das Material der Patrone besteht vorzugsweise aus Braunglas, es können aber auch Folienpatronen mit UV-Schutz in der Folie, z.B. aus Polyethylen, Polyethylenterephthalat oder aus entsprechenden Verbundmaterialien verwendet werden. Die Patrone wird in das Bohrloch eingesetzt, und durch schlagdrehendes Einbringen des Befestigungselementes in die Bohrlöcher werden die Patrone und die Kammern zerstört. Dabei werden die beiden Komponenten gemischt und die Reaktion wird initiiert. Die ausgehärtete Reaktionsharzmasse ist in der Lage, spreizdruckfrei die Lasteinleitung in den Untergrund zu ermöglichen. Vor allen Dingen für Schwerlastverankerungen haben sich derartige Verbundanker bewährt.

Besonders für Verankerungen in porösem oder Hohlräume enthaltendem Untergrund, z.B. in Schaumblocksteinen oder in Hohlziegelsteinen, aber auch in massivem Gestein, Ziegelsteinen und Beton, kann man mit Zweikammer-Kartuschen arbeiten (s. z.B. DE-A 36 17 702). Die beiden Komponenten der Dübelmasse werden gleichzeitig aus der Kartusche herausgepreßt, durch geeignete Vorrichtungen, z.B. Schnecken, vermischt und in das Bohrloch gedrückt. In diese Masse kann dann direkt ein Befestigungselement mit beliebig geformtem Querschnitt eingeführt werden, welches nach dem Aushärten des Harzes im Bohrloch verankert wird; oder man führt in das Bohrloch erst eine Innengewindehülse ein, die durch Aushärten des Harzes fixiert werden, und in die dann Schrauben bzw. Ankerstangen eingedreht werden können. Bei Hohlziegelsteinen wird in ein Bohrloch erst eine gitterförmige, zylindrische Hülse aus Kunststoff oder Metall eingesetzt. Dann wird Harz aus der Zweikammer-Kartusche eingepreßt. Durch Einführen einer Innengewindehülse wird Dübelmasse durch das Gitter der Siebhülse gedrückt, so daß sich nach dem Aushärten der Dübelmasse eine feste Verankerung ausbildet.

Bei Verankerungen hinter Rigips-Platten oder in Hohlkammersteinen wendet man Kartuschen mit schaumfähigen Klebemassen an, wie sie z.B. in EP-A 338 983 beschrieben sind. Die eine Komponente der Dübelmasse enthält ein anorganisches Carbonat, z.B. Kreide, die andere Komponente eine Säure, z.B. Polyacrylsäure oder Phosphorsäure. In ein Bohrloch wird eine Innengewindehülse oder eine Siebhülse eingesetzt, in welche die schaumfähige Dübelmasse eingedrückt wird. Beim Vermischen der Komponenten wird CO₂ freigesetzt, welches bewirkt, daß die Dübelmasse aufschäumt und die Hohlräume ausfüllt, bzw. hinter der Platte eine pilzförmige Verankerung bildet, in der nach dem Aushärten der Dübelmasse der Befestigungspunkt verankert ist.

Geeignete Reaktionsharze für die chemische Befestigungstechnik sind Vinylester- und Vinylesterurethanharze, wie z.B. in EP-A 150 555, EP-A 199 671, EP-A 508 183 und EP-A 534 201 beschrieben. Zur Stabilisierung gegen vorzeitige Polymerisation enthalten diese Harze üblicherweise Inhibitoren, beispielsweise Hydrochinon, substituierte Hydrochinone, Benzochinon, tert.-Butylbrenzkatechin oder Phenothiazin. Diese Inhibitoren verleihen dem Harz eine Lagerstabilität von mehreren Monaten, allerdings nur in Gegenwart von im Harz gelöstem Sauerstoff. Wenn das Harz unter Luftabschluß gelagert wird, setzt schon nach einigen Tagen die Polymerisation ein. Aus diesem Grund mußten bisher die Dübelmassen so verpackt werden, daß das Harz mit Luft in Berührung kommen konnte. Eine luftdichte Verpackung wäre aber stabiler und einfacher zu konstruieren. Eine Aufgabe der Erfindung bestand also darin, einen Inhibitor bereitzustellen, der bei luftdichten Verpackungen und auch in Gegenwart von Licht eine ausreichend lange Lagerstabilität gewährleistet.

Eine spezielle Ausführungsform der chemischen Befestigungstechnik ist in DE-A 42 31 161 beschrieben. Danach enthält die eine Komponente neben dem Reaktivharz noch eine hydraulisch abbindende oder polykondensierbare anorganische Verbindung, z.B. Zement, und die andere Komponente enthält neben dem Härtungsmittel noch Wasser. Es hat sich nun gezeigt, daß bei Verwendung üblicher phenolischer Inhibitoren die Inhibitorwirkung durch den alkalisch reagierenden Zement gestört wird. Es tritt eine lokale vorzeitige Härtung ein, welche bewirkt, daß die eigentliche Härtung beim Vermischen der Komponenten ungleichmäßig wird und in der Verankerungsmasse schlecht ausgehärtete Bereiche entstehen. Darunter leidet natürlich die Auszugsfestigkeit der Ankerstange. Eine weitere Aufgabe der Erfindung bestand also darin, einen Inhibitor bereitzustellen, welcher auch bei der speziellen Ausführungsform mit Zementzusatz zum Reaktivharz keine Störung der Inhibitorwirkung zur Folge hat.

Beide Aufgaben werden erfindungsgemäß dadurch gelöst, daß als Inhibitor ein Piperidinyl-N-oxyl oder ein Tetrahydropyrrol-N-oxyl eingesetzt wird.

Gegenstand der Erfindung ist demzufolge eine Dübelmasse für die chemische Befestigung von Ankerstangen, Gewindehülsen und Schrauben in Bohrlöchern, enthaltend
I. ein radikalisch härtbares Reaktionsharz, welches 0,0005 bis 2 Gew.-% eines Piperidinyl-N-oxyls oder eines Tetrahydropyrrol-N-oxyls als Inhibitor enthält, und
II. - räumlich getrennt davon angeordnet - ein Härtungsmittel für das Harz.

Als Reaktionsharze sind Vinylesterharze und Vinylesterurethanharze geeignet.
1. Ungesättigte Vinylesterharze (Epoxyacrylate) sind Additionsprodukte von Polyepoxiden mit ungesättigten Monocarbonsäuren, vorzugsweise Methacrylsäure. Diese Harze werden beispielsweise in den US-PS 3 066 112 und 3 179 623 beschrieben, wobei bevorzugt Vinylesterharze auf Basis von Bisphenol A zur Anwendung kommen. Sie zeichnen sich durch hohe Zähigkeit und gute Chemikalienbeständigkeit bei begrenzter Wärmeformbeständigkeit aus. Vinylesterharze aus Epoxy-Novolakharzen und (Meth-)Acrylsäure, wie sie beispielsweise in der US-PS 3 256 226 beschrieben werden, weisen dagegen höhere Wärmeformbeständigkeiten, aber geringere Zähigkeiten auf.
   Kennzeichnend für diese Klasse der Vinylesterharze ist die Gruppe 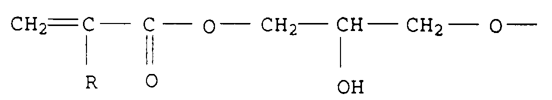 mit R=H oder CH₃.
   Eine andere Klasse von Vinylesterharzen sind Veresterungsprodukte von gegebenenfalls alkoxyliertem Bisphenol A mit (Meth)acrylsäure, z.B. nach EP-A 534 201.
2. Ungesättigte Vinylesterurethanharze (Urethanacrylate) weisen im allgemeinen folgende Gruppen auf:
   a) 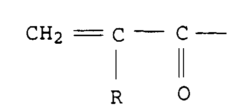 (mit R = H oder CH₃).
   b) 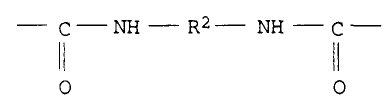 (mit R² = zweiwertiger aliphatischer, aromatischer oder cycloaliphatischer Rest mit 4 bis 40 C-Atomen, vorzugsweise ein aromatischer Rest mit 6 bis 20 C-Atomen), gegebenenfalls
   c)

      - O - R³ - O -

      (mit R⁴ = aliphatischer, cycloaliphatischer oder aromatischer Rest mit 2 bis 100 C-Atomen).

   Vorzugsweise ist das Vinylesterurethanharz ein Umsetzungsprodukt aus
   - einem polyfunktionellen Isocyanat,
   - gegebenenfalls einem mehrwertigen Alkohol,
   - gegebenenfalls einem mehrwertigen Amin,
   - einem Hydroxyalkyl-(meth)acrylat,
   wobei bei der Umsetzung das Gewichtsverhältnis Isocyanat: (Alkohol+Amin) zwischen 100:0 und 100:300 beträgt und das Äquivalentverhältnis Hydroxyalkyl(meth)acrylat zu den freien Isocyanatgruppen des Umsetzungsproduktes zwischen 3:1 und 1:2 liegt.

Die Reaktionsharze enthalten 10 bis 80, vorzugsweise 30 bis 60 Gew.-% Comonomere.

Bevorzugte Comonomere sind Methacrylsäureester, wie z.B. 2-Ethylhexylmethacrylat, Phenylethylmethacrylat, Tetrahydrofurfurylmethacrylat, Ethyltriglykolmethacrylat, N,N-Dimethylaminoethylmethacrylat, N,N-Dimethylaminomethylmethacrylat, 1,4-Butandioldimethacrylat, Acetocarboxyalkylmethacrylat, Acetoacetoxyethylmethacrylat, 1,2-Ethandioldimethacrylat, Isobornylmethacrylat, Diethylenglykoldimethacrylat, Methoxypolyethylenglykolmonomethacrylat, Trimethylcyclohexylmethacrylat, Trimethylolpropantrimethacrylat, 2-Hydroxyethylmethacrylat, Hydroxypropylmethacrylat und Dicyclopentyloxyethylmethacrylat. Besonders bevorzugt ist Butandioldimethacrylat.

Acrylsäureester sind weniger bevorzugt, da sie meist hautreizend sind und eine geringe Hydrolysebeständigkeit ergeben.

Grundsätzlich können auch andere übliche Comonomere, allein oder im Gemisch mit den Methacrylsäureestern, eingesetzt werden, z.B. Styrol, α-Methylstyrol, alkylierte Styrole, wie tert.-Butylstyrol, Divinylbenzol und Allylverbindungen.

Die Dübelmasse enthält erfindungsgemäß 0,0005 bis 2, vorzugsweise 0,1 bis 1 Gew.-%, eines Piperidinyl-N-oxyls oder eines Tetrahydropyrrol-N-oxyls als Inhibitor. Es handelt sich dabei um Nitroxyle der Formel 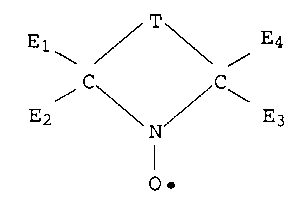 worin E₁ und E₃ unabhängig voneinander C₁-C₅-Alkyl oder Phenyl sind, E₂ und E₄ unabhängig voneinander C₁-C₅-Alkyl sind oder E₁ und E₂ zusammen oder E₃ und E₄ zusammen Tetramethylen oder Pentamethylen sind, und T eine zweiwertige Gruppe ist, die zusammen mit dem Stickstoffatom und den beiden tertiären Kohlenstoffatomen einen 5- oder 6-gliedrigen Ring bilden, wobei die Gruppe T gegebenenfalls substituiert sein kann,.

Bevorzugt ist 4-Hydroxy-2,2,6,6-Tetramethylpiperidin-l-oxyl.

Bei einer bevorzugten Ausführungsform enthält die Dübelmasse zusätzlich 0,005 bis 2, vorzugsweise 0,05 bis 1 Gew.-% eines herkömmlichen Inhibitors, insbesondere eines Phenols, Chinons oder Phenothiazins, z.B. 2,6-Di-tert.-butyl-p-kresol.

Als verstärkende Füllstoffe für das Reaktionsharz dienen z.B. Quarz, Glas, Korund, Porzellan, Steingut, Schwerspat, Leichtspat, Gips,Talkum und Kreide. Die Füllstoffe werden in Form von Sanden, Mehlen oder speziellen Formkörpern (Zylinder, Kugeln usw.) entweder der Harzlösung und/oder dem Härter (Initiator) zugemischt. Die Füllstoffe können als Fasern (fibrilläre Füllstoffe) eingesetzt werden. Bevorzugt und deutlicher verstärkend wirken sich die globulären, inerten Stoffe (Kugelform) aus.

Üblicherweise werden für die Peroxidhärtung Beschleuniger verwendet, welche zweckmäßigerweise räumlich zusammen mit dem Harz, d.h. getrennt vom Härter, angeordnet sind. Geeignete Beschleuniger sind z.B. tertiäre organische Amine und: aromatische Amine wie N,N-Dimethylanilin, N,N-Diethylanilin; Toluidine und Xylidine wie N,N-Di-isopropanol-para-toluidin, N,N-Dimethyl-p-toluidin, N,N-Bis-(2-hydroxyethyl)-xylidin und -toluidin; ferner Co-, Mn-, Sn- oder Ce-Salze, wie z.B. Cobaltoctoat oder -naphthenat.

Das Reaktionsharz soll vorzugsweise eine Viskosität bei 23°C zwischen 30 und 5.000 mPa·s aufweisen.

Räumlich getrennt vom Harz ist in der erfindungsgemäßen Dübelmasse das Härtungsmittel angeordnet. Bevorzugte Härtungsmittel sind lagerstabile organische Peroxide. Besonders gut geeignet sind Dibenzoylperoxid und Methylethylketonperoxid, ferner tert.-Butylperbenzoat, Cyclohexanonperoxid, Laurylperoxid und Cumolhydroperoxid, sowie tert.- Butylperoxy-2-ethylhexanoat.

Die Peroxide werden vorzugsweise in Mengen von 0,5 bis 10 Gew.%, vorzugsweise von 3 bis 7 Gew.%, bezogen auf das Reaktionsharz, eingesetzt.

Die Härtungsmittel werden zweckmäßigerweise durch inerte Füllstoffe phlegmatisiert aufgebracht, wobei Quarzsande bevorzugt sind.

Bei einer besonders bevorzugten Ausführungsform der Erfindung enthält die Komponente I neben dem Reaktionsharz zusätzlich noch eine hydraulisch abbindende oder polykondensierbare anorganische Verbindung, insbesondere Zement, und die Komponente II enthält neben dem Härtungsmittel noch Wasser. Derartige Dübelmassen sind ausführlich in DE-A 42 31 161 beschrieben.

In der Regel wird die Konfektionsform einer 2-Kammerpatrone gewählt. Als bewährte Ausführungsform haben sich Glaspatronen erwiesen, da das "Verpackungsmittel" Glas beim Mischprozeß fein zermahlen und dann als verstärkender Füllstoff in die Bindemittelmatrix integriert wird. Weiterhin können Mehrkammerpatronen aus keramischem Material eingesetzt werden, wie sie beispielsweise in DE-A 39 29 603.2 beschrieben sind, ferner Folienpatronen, z.B. aus Polyethylen, Polyethylenterephthalat oder Verbundmaterialien.

Als Kartuschen werden vorzugsweise Zweikammerkartuschen verwendet, wobei die größere Kammer das Harz und die kleinere Kammer das Härtungsmittel enthält, jeweils zusammen mit Füllstoff. Im Fall schaumfähiger Klebemassen wird zweckmäßigerweise das Carbonat zum Harz gegeben, die Säure-Komponente kann entweder mit dem Härter zusammen in eine Kammer oder aber in eine separate Kammer gefüllt werden.

Die Harze mit den erfindungsgemäßen Inhibitoren können ohne besondere Vorkehrungen für die chemische Befestigungstechnik eingesetzt werden. Derartige Verankerungen weisen ein gutes Rißdehnungsverhalten, einen geringen Volumenschrumpf, gute Hydrolysebeständigkeit und Hitzestandfestigkeit sowie einen ausgezeichneten Formschluß an mineralischen Aufnahmewerkstoffen, wie Beton, Naturstein, sowie an Schaum- und Hohlblocksteinen auf. Die Dübelmassen zeichnen sich - auch in Abwesenheit von Luftsauerstoff - durch eine besonders gute Lagerstabilität aus. Zement enthaltende Dübelmassen härten bei Zusatz der erfindungsgemäßen Inhibitoren gleichmäßig aus.

Die in den Beispielen genannten Prozentzahlen beziehen sich auf das Gewicht.

### Beispiele

1a. 300 g des Isomerengemisches von Diphenylmethandiisocyanat werden mit 1 ml Dibutylzinndilaurat versetzt. Bei 40°C werden 37 g Dipropylenglykol zugetropft. Es wird eine Stunde nachgerührt. Anschließend werden 280 g Hydroxypropylmethacrylat zugetropft, dabei erhöht sich die Reaktionstemperatur auf 80°C. Bei 90°C wird nachgerührt, bis der Restisocyanatgehalt unter 0,01 % abgesunken ist (Schmelzviskosität bei 100°C ca. 750 mPa·s). Das Harz wird mit 6,7 g 4-Hydroxy-2,2,6,6-Tetramethyl-piperidin-1-oxyl sowie 2,7 g 2,6-Di-tert.-butyl-p-kresol inhibiert. Als Reaktivverdünner werden 535 g 1,4-Butandioldimethacrylat und 133 g Acetoacetoxyethylmethacrylat zugesetzt. Mit einem aromatischen Amin wird die Gelierzeit auf ca. 3,5 Min. eingestellt. Das Harz besitzt eine Viskosität von ca. 250 mPa·s. Bei Lagerung unter Luftausschluß bei 80°C auch am Tageslicht ist das Harz nach 3 Wochen Lagerstabil. Bei Lagerung unter Belichtung in einem Suntest-Gerät CPS Plus der Firma Heraeus ist die Probe 3 Wochen lagerstabil.
1b. Der Ansatz la wurde wiederholt, als Inhibitor wurde jedoch eine Mischung aus 5,1 g tert.-Butyl-brenzkatechin und 0,13 g Phenothiazin eingesetzt. Bei Lagerung unter Luftausschluß bei 80°C war dieses Harz bereits nach 5 Stunden geliert. Bei Lagerung unter Belichtung in dem Suntest-Gerät ist die Probe nach 3 Stunden geliert.
2. 1475 g eines prepolymeren Diisocyanats auf Basis von 1286 g 4,4'-Diphenylmethandiisocyanat werden in 1320 g Styrol bei 40°C vorgelöst. Nach Zugabe von 1,3 ml Dibutylzinndilaurat werden 125 g Dipropylenglykol und 74 g Polypropylenglykol (OH-Zahl 250) zugetropft. Nach Abklingen der exothermen Reaktion wird eine Stunde nachgerührt und danach 1195 g Hydroxypropylmethacrylat zugetropft. Nach beendetem Zulauf werden weitere 1,3 ml Dibutylzinndilaurat zugegeben und der Ansatz bei 80°C nachgerührt, bis der Restisocyanatgehalt unter 0,01 % abgesunken ist. Das Harz wird mit 16,8 g 4-Hydroxy-2,2,6,6-Tetramethyl-piperidin-1-oxyl inhibiert. Mit einem aromatischen Amin wird die Gelierzeit auf ca. 3,5 Min. eingestellt. Das Harz besitzt eine Viskosität von ca. 460 mPa·s.
3. Zu 300 g des Bisphenol A-diglycidylethers (Epikote 828, Fa. Shell) werden 1,3 g 2,6-Di-tert.-butyl-p-kresol sowie 0,36 g Dimethylbenzylamin gegeben. Anschließend werden bei 85°C 136 g Methacrylsäure zugetropft, wobei die Innentemperatur auf 110°C gesteigert wird. Der Ansatz wird unter Luft gerührt, bis die Säurezahl den Abstellwert ≤ 15 Einheiten erreicht hat. Anschließend wird mit 3,4 g 4-Hydroxy-2,2,6,6-Tetramethyl-piperidin-1-oxyl inhibiert. Als Reaktivverdünner werden 170 g 1,4-Butandioldimethacrylat und 68 g Acetoacetoxyethylmethacrylat zugesetzt. Mit einem aromatischen Amin wird die Gelierzeit auf ca. 3,5 Min. eingestellt.
4. 1000 g des Veresterungsprodukts von vorwiegend bis-ethoxyliertem Bisphenol A mit Methacrylsäure werden auf 50°C erwärmt. Anschließend wird mit 5 g 4-Hydroxy-2,2,6,6-Tetramethyl-piperidin-l-oxyl inhibiert. Mit einem aromatischen Amin wird die Gelierzeit auf ca. 3,5 Min. eingestellt. Das Harz besitzt eine Viskosität von ca. 1600 mPa·s.

## Patentansprüche

1. Dübelmasse zur chemischen Befestigung von Ankerstangen, Gewindehülsen und Schrauben in Bohrlöchern, enthaltend
I. ein radikalisch härtbares Reaktionsharz, welches 0,0005 bis 2 Gew.-% eines Inhibitors enthält, und
II. - räumlich getrennt davon angeordnet -
ein Härtungsmittel für das Harz,
dadurch gekennzeichnet, daß das Harz ein Piperidinyl-N-oxyl oder ein Tetrahydropyrrol-N-oxyl als Inhibitor enthält.

2. Dübelmasse nach Anspruch 1, dadurch gekennzeichnet, daß das Reaktionsharz mindestens 20 Gew.-% eines Vinylester- oder Vinylesterurethan-Harzes enthält.

3. Dübelmasse nach Anspruch 1, dadurch gekennzeichnet, daß das Harz einen Methacrylsäureester als Comonomer enthält.

4. Dübelmasse nach Anspruch 1, dadurch gekennzeichnet, daß das Harz einen Beschleuniger für das Härtungsmittel enthält, vorzugsweise ein tertiäres organisches Amin.

5. Dübelmasse nach Anspruch 1, dadurch gekennzeichnet, daß das Harz zusätzlich noch einen herkömmlichen Inhibitor enthält.

6. Dübelmasse nach Anspruch 5, dadurch gekennzeichnet, daß die Dübelmasse zusätzlich noch ein Phenol, ein Chinon oder Phenothiazin enthält.

7. Dübelmasse nach Anspruch 1, dadurch gekennzeichnet, daß das Härtungsmittel ein organisches Peroxid ist, welches in Mengen von 0,5 bis 10 Gew.-%, bezogen auf das Harz, eingesetzt wird.

8. Dübelmasse nach Anspruch 1, dadurch gekennzeichnet, daß die Komponente I neben dem Harz zusätzlich noch eine hydraulisch abbindende oder polykondensierbare anorganische Verbindung und die Komponente II neben dem Härtungsmittel zusätzlich noch Wasser enthält.

9. Patrone, Kartusche oder Folienbeutel, enthaltend eine Dübelmasse nach Anspruch 1, dadurch gekennzeichnet, daß sie zwei oder mehrere voneinander getrennte Kammern umfassen, in welchen das Harz bzw. das Härtungsmittel angeordnet sind.

## Claims

1. Plugging compound for chemical fastening of anchor bolts, threaded sleeves and screws in drill-holes, which composition contains
I. a free-radically curable reactive resin which contains 0.0005 to 2 wt.% of an inhibitor, and,
II. arranged spatially separately therefrom, a curing agent for the resin,
characterised in that the resin contains a piperidinyl-N-oxyl or a tetrahydropyrrole-N-oxyl as the inhibitor.

2. Plugging compound according to claim 1,
characterised in that the reactive resin contains at least 20 wt.% of a vinyl ester or vinyl ester urethane resin.

3. Plugging compound according to claim 1,
characterised in that the resin contains a methacrylic acid ester as the comonomer.

4. Plugging compound according to claim 1,
characterised in that the resin contains an accelerator for the curing agent, preferably a tertiary organic amine.

5. Plugging compound according to claim 1,
characterised in that the resin additionally also contains a conventional inhibitor.

6. Plugging compound according to claim 5,
characterised in that the plugging compound additionally also contains a phenol, a quinone or phenothiazine.

7. Plugging compound according to claim 1,
characterised in that the curing agent is an organic peroxide which is used in quantities of 0.5 to 10 wt.%, relative to the resin.

8. Plugging compound according to claim 1,
characterised in that component I additionally also contains a hydraulically setting or polycondensable inorganic compound as well as the resin, and component II additionally also contains water as well as the curing agent.

9. Capsule, cartridge or film pouch containing a plugging compound according to claim 1,
characterised in that it comprises two or more chambers which are separated from each other, in which the resin and curing agent are respectively arranged.

## Revendications

1. Masse à cheviller pour la fixation chimique de barres d'ancrages, de douilles filetées et de vis dans des trous, contenant
I une résine réactive apte au durcissement radicalaire et qui contient 0,0005 à 2 % en poids d'un inhibiteur et
II - séparément de I - un durcisseur pour la résine,
Caractérisée en ce que la résine contient en tant qu'inhibiteur un pipéridinyl-N-oxyle ou un tétrahydropyrrol-N-oxyle.

2. Masse à cheviller selon la revendication 1, caractérisée en ce que la résine réactive contient au moins 20 % d'une résine d'ester vinylique ou d'une résine d'ester vinylique-uréthanne.

3. Masse à cheviller selon la revendication 1, caractérisée en ce que la résine contient un ester méthacrylique en tant que comonomère.

4. Masse à cheviller selon la revendication 1, caractérisée en ce que la résine contient un accélarateur du durcisseur, de préférence une amine organique tertiaire.

5. Masse à cheviller selon la revendication 1, caractérisée en ce que la résine contient en outre un inhibiteur de type connu.

6. Masse à cheviller selon la revendication 5, caractérisée en ce qu'elle contient en outre un phénol, une quinone ou une phénothiazine.

7. Masse à cheviller selon la revendication 1, caractérisée en ce que le durcisseur est un peroxyde organique mis en oeuvre en quantité de 0,5 à 10 % du poids de la résine.

8. Masse à cheviller selon la revendication 1, caractérisée en ce que le composant I contient, en plus de la résine, une matière minérale apte à la prise hydraulique ou polycondensable et le composant II contient, en plus du durcisseur, de l'eau.

9. Capsules, cartouches ou sachets de feuille contenant une masse à cheviller selon la revendication 1, caractérisés en ce qu'ils comportent deux ou plusieurs compartiments séparés dans lesquels on dispose respectivement la résine et le durcisseur.
